(19) **Europäisches Patentamt**
**European Patent Office**
**Office européen des brevets**

(11) **EP 1 438 550 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
***G01C 21/14*** *(2006.01)* ***G01C 21/16*** *(2006.01)*

(21) Anmeldenummer: **02785127.8**

(86) Internationale Anmeldenummer:
**PCT/EP2002/010582**

(22) Anmeldetag: **20.09.2002**

(87) Internationale Veröffentlichungsnummer:
**WO 2003/036233 (01.05.2003 Gazette 2003/18)**

(54) **VERFAHREN ZUM BESTIMMEN DES KURSES EINES FAHRZEUGS**

METHOD FOR DETERMINING THE COURSE OF A VEHICLE

PROCEDE DE DETERMINATION DE LA COURSE D'UN VEHICULE

(84) Benannte Vertragsstaaten:
**AT BE BG CH CY CZ DE DK EE ES FI FR GB GR IE IT LI LU MC NL PT SE SK TR**

(30) Priorität: **22.10.2001 DE 10151279**

(43) Veröffentlichungstag der Anmeldung:
**21.07.2004 Patentblatt 2004/30**

(73) Patentinhaber: **ATLAS ELEKTRONIK GMBH**
**28305 Bremen (DE)**

(72) Erfinder: **SCHMIEGEL, Armin**
**22609 Hamburg (DE)**

(56) Entgegenhaltungen:
**GB-A- 1 308 647 US-A- 5 166 882**

- **LARSEN M B: "SYNTHETIC LONG BASELINE NAVIGATION OF UNDERWATER VEHICLES" OCEANS 2000. MTS/IEEE. WHERE MARINE SCIENCE AND TECHNOLOGY MEET. PROVIDENCE, RI, SEPT. 11 - 14, 2000, OCEANS MTS/IEEE CONFERENCE PROCEEDINGS, NEW YORK, NY: IEEE, US, Bd. 3 OF 3, September 2000 (2000-09), Seiten 2043-2050, XP002901743 ISBN: 0-7803-6552-6**
- **PATENT ABSTRACTS OF JAPAN vol. 1996, no. 09, 30. September 1996 (1996-09-30) & JP 08 138200 A (KAWASAKI HEAVY IND LTD), 31. Mai 1996 (1996-05-31)**

## Beschreibung

Die Erfindung betrifft ein Verfahren zur Bestimmung des Kurses eines mit Navigationssensoren zum Messen von Navigationsdaten ausgestatteten Fahrzeugs, insbesondere eines Unterwasserfahrzeugs.

Für Vermessungsoperationen unter Wasser, wie z.B. für die Meeresboden- und Eiskartographie oder für die Lagevermessung von Pipelines und Unterwasserkabel, werden z.B. mit Sonaren ausgestattete, autonom fahrende Unterwasserfahrzeuge eingesetzt. Diese Unterwasserfahrzeuge verfügen über eigene. Navigationssysteme, um einen programmierten Kurs abzufahren und an vorgegebenen Positionen Meßdaten, z.B. über die Bodenbeschaffenheit, aufzunehmen und kartographisch richtig abzuspeichern. Hierfür ist es erforderlich, daß die jeweilige Position des Unterwasserfahrzeugs, der bestimmte Meßdaten zugeordnet werden sollen, sehr genau bestimmt wird.

Handelsübliche Trägheits- oder Inertialnavigationssysteme verwenden ein Modell des Meßprozesses, mit dem sie die Fehler der aus den Navigationssensoren Kreisel und Beschleunigungsmesser bestehenden Navigationssensorik reduzieren. Des weiteren modellieren diese Trägheitssysteme die eigene Fehlerdynamik und korrigieren die Werte um den geschätzten Fehler.

Bei einem ebenfalls bekannten Verfahren (DE 1 923 884 A1) wird die Genauigkeit eines mit einem solchen Trägheitsnavigationssystem berechneten Kurses dadurch verbessert, daß das Trägheitsnavigationssystem mit einem Dopplernavigationssystem kombiniert wird. In diesem Fall wird mit Hilfe eines Dopplerlogs die Fehler des Trägheitsnavigationssystems regelmäßig bestimmt und das Trägheitsnavigationssystem entsprechend korrigiert. Auch ein solches sog. gestütztes Trägheitsnavigationssystem weist einen mit der Zeit wachsenden Fehler auf, so daß während der Mission des Fahrzeugs der berechnete Kurs immer stärker von dem vom Fahrzeug tatsächlich gefahrenen Kurs abweicht.

Die Veröffentlichung durch Larsen, M.B., "Synthetic Long Baseline Navigation Of Underwater Vehicles", "Where Marine Science and Technology meet", Providence, RI, Sept. 11-14, 2000, Conf. Proc., Bd. 3, September 2000, Seiten 2043-2050 offenbart eine Verbesserung der Kursberechnung mittels einer Kombination von Trägheitsnavigationdaten und akustischen Daten.

Der Erfindung liegt die Aufgabe zugrunde, ein Verfahren zur Bestimmung des von einem Fahrzeug zurückgelegten Kurses anzugeben, das mit den von den Navigationssensoren gelieferten Navigationsdaten im Nachhinein eine verbesserte Kursberechnung ermöglicht, die die vom Fahrzeug tatsächlich durchfahrenen Positionen mit einer sehr hohen Genauigkeit bestimmt.

Die Aufgabe ist erfindungsgemäß durch die Merkmale im Anspruch 1 gelöst.

Das erfindungsgemäße Verfahren hat den Vorteil, daß zwei Kurse erhalten werden, von denen einer im Anfangsbereich der vom Fahrzeug tatsächlich zurückgelegten Fahrstrecke und der andere im Endbereich der tatsächlichen Fahrstrecke sehr genau ist. Durch die Verrechnung der beiden Kurse erhält man im übrigen Fahrstreckenbereich eine sehr gute Schätzung des tatsächlich gefahrenen Kurses. Grundlage für die Berechnung der beiden Kurse bilden die während der Fahrt von den Navigationssensoren des Fahrzeugs gemessenen und gespeicherten Sensordaten. Als erster Kurs kann auch der von einem fahrzeugeigenen Navigationssystem während der Fahrt berechnete Kurs verwendet werden. Sind bessere Algorithmen vorhanden, kann mit diesen der vom fahrzeugeigenen Navigationssystem berechnete erste Kurs neu nachgerechnet werden. Der zweite Kurs wird mit rückwärtslaufender Zeit, also umgedrehtem Zeitpfeil, und entsprechend angepaßten Navigationsalgorithmen von einer Position aus berechnet, an der das Fahrzeug am Ende seiner Fahrstrecke tatsächlich angekommen ist und die mit einem entsprechenden Positionssensor sehr genau vermessen wird.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung werden die beiden Kurse durch eine gewichtete Mittelung verrechnet, wozu für jede auf einem Kurs liegende Position die Kovarianz bestimmt wird und für zeitgleiche Positionen auf den beiden Kursen und den zugehörigen Kovarianzen der gewichtete Mittelwert gemäß im folgenden noch angegebener Gl. (1) berechnet wird. Damit ergibt sich ein resultierender Kurs des Fahrzeugs, der eine wesentlich geringere Kovarianz zeigt als jeder der berechneten Kurse. Die dem resultierenden Kurs zugehörige, resultierende Kovarianz wird aus den Kovarianzen zeitgleicher Positionen auf dem ersten und zweiten Kurs gemäß im folgenden noch angegebener G1. (2) berechnet.

Gemäß einer vorteilhaften Ausführungsform der Erfindung wird bei der Berechnung von erstem und zweiten Kurs jeweils nur eine Hälfte der abgespeicherten Navigationsdaten verwendet.

Dabei werden zeitrichtig aufeinanderfolgende Navigationsdaten abwechselnd der einen und anderen Kursberechnung zugeführt. Dies ist in solchen Fällen von Vorteil, in denen die Navigationssensoren nicht voneinander statistisch unabhängige Navigationsdaten liefern.

Gemäß einer vorteilhaften Ausführungsform der Erfindung wird zur genauen Vermessung der Position des Fahrzeugs am Beginn der Fahrstrecke und am Ende der tatsächlich zurückgelegten Fahrstrecke ein Global-Position-System (GPS) eingesetzt, das die Position mit nur geringem Fehler angibt. Bei Anwendung des Verfahrens in einem Unterwasserfahrzeug ist es hierzu erforderlich, daß am Ende der Fahrstrecke das Unterwasserfahrzeug auftaucht und seine Position vermißt.

Die Erfindung ist anhand eines in der Zeichnung illustrierten Ausführungsbeispiels im folgenden näher beschrieben. Es zeigen:

Fig. 1 ein Blockschaltbild einer Vorrichtung zur Realisierung des Verfahrens der Kursbestimmung eines Wasserfahrzeugs,

Fig. 2 eine Darstellung eines nach dem Verfahren bestimmten Kurses eines Oberflächenschiffes mit einem nach dem Koppelnavigationsverfahren arbeitenden Navigationssystem,

Fig. 3 eine Darstellung der resultierenden Standardabweichung eines nach dem Verfahren bestimmten Kurses eines Oberflächenschiffes mit einem nach dem Trägkeitsnavigationsverfahren arbeitenden Navigationssystem.

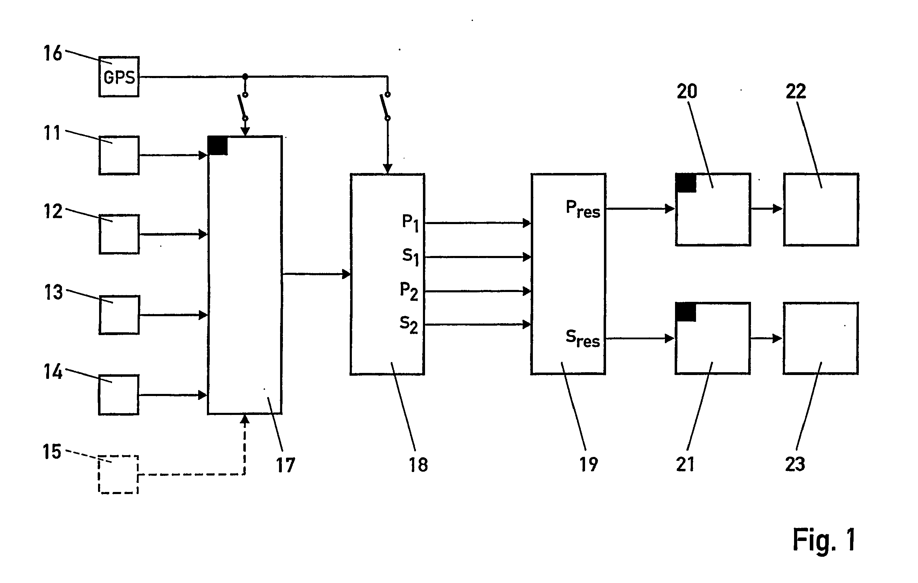

Die in Fig. 1 im Blockschaltbild dargestellte Vorrichtung zur Kursbestimmung eines Fahrzeugs umfaßt im Fahrzeug angeordnete Navigationssensoren 11 - 15 zur Messung von für die Navigation des Fahrzeugs erforderliche Navigationsdaten, einen Datenspeicher 17, in dem die während der Fahrt von den Navigationssensoren 11 - 15 in Zeitintervallen gemessenen Navigationsdaten abgespeichert werden, sowie einen Navigationskern 18, der einen Navigationsrechner zur Verarbeitung der Navigationsdaten mit geeigneten Navigationsalgorithmen und einen Fehlerschätzer, z.B. Kalman-Filter, umfaßt, das die Ungenauigkeit des mit den Navigationsalgorithmen berechneten Fahrzeugkurses als Kovarianz S bestimmt. Der Navigationsrechner kann je nach Struktur den Kurs mit verschiedenen Algorithmen berechnen. Messen die Navigationssensoren 11, 12 die Fahrzeuggeschwindigkeit v und den Kurswinkel $\psi$ des Fahrzeugs, so arbeitet der Navigationsrechner mit Algorithmen der klassischen Koppelnavigation. Messen die Sensoren 11, 12 als Kreisel und Beschleunigungsmesser einer Inertialsensorik Drehrate oder Drehgeschwindigkeit $\omega$ und Fahrzeugbeschleunigung a, so arbeitet der Navigationsrechner mit Algorithmen der bekannten Trägheits- oder Inertialnavigation. In beiden Fällen kann der berechnete Kurs noch verbessert werden, wenn die Sensordaten mindestens eines sog. Stützsensors 15 zur Korrektur der berechneten Kurspositionen herangezogen werden. Bekannt ist die Verwendung eines Geschwindigkeitsmessers, speziell eines Dopplerlogs als Stützsensor. Für ein Unterwasserfahrzeug, das eine dreidimensionale Bewegung im Seegebiet ausführt, ist noch ein Tiefensensor 13, der die Tauchtiefe mißt, und ein Lagesensor 14, der Roll- und Nicklage $\Phi$, $\vartheta$ des Unterwasserfahrzeugs mißt, vorzusehen.

Im Falle, daß das Fahrzeug über ein eigenes Navigationssystem verfügt, kann in der Vorrichtung auf einen separaten Navigationskern 18 verzichtet und das Fahrzeug-Navigationsystem selbst herangezogen werden.

Die Vorrichtung umfaßt weiter einen Positionssensor 16, der vorzugsweise ein Global-Position-System (GPS) ist und die Fahrzeugposition hochgenau vermißt, eine Recheneinheit 19, einen Kursdaten- oder Positionsspeicher 20, einen Speicher 21 für die Kovarianzmatrizen und ggf. Anzeigeeinheiten 22, 23 zur Darstellung des berechneten Kurses und der zugehörigen, resultierenden Kovarianz. Mit den Komponenten der beschriebenen Vorrichtung wird das Verfahren zur Berechnung eines optimierten Kurses des Fahrzeugs, der dem tatsächlich von dem Fahrzeug zurückgelegten Kurs sehr viel genauer approximiert als bisher bekannten Verfahren, wie folgt durchgeführt:

Mittels des Positionssensors 16 (GPS) wird am Beginn der Fahrstrecke, also am Kursanfang, die Position des Fahrzeugs mit den Vektorkomponenten x, y, z gemessen und im Speicher 17 abgelegt. Nach Zurücklegen der Fahrstrecke, also am Ende des tatsächlich gefahrenen Kurses, des sog. wahren Kurses, wird die Position des Fahrzeugs erneut mit dem Positionssensor 16 gemessen und diese Position dem Navigationskern 18 zugeführt. Während des Zurücklegens der Fahrstrecke messen die Navigationssensoren 11 - 15 die erforderlichen Navigationsdaten, die im Speicher 17 in Zuordnung zu dem Zeitpunkt ihrer Messung abgespeichert werden. Während der Fahrt oder erst nach Beendigung der Fahrt wird mit den Algorithmen im Navigationskern 18, ausgehend von der Fahrzeugposition am Kursanfang, ein vom Fahrzeug zurückgelegter erster Kurs berechnet. Nach dem Fahrtende wird mit den zeitbezogenen Navigationsdaten im Datenspeicher 17, ausgehend von der Fahrzeugposition am Kursende, ein fiktiver, zweiter Kurs für eine vom Zeitpunkt des Kursendes an zurücklaufende Zeit berechnet. Man erhält zwei Kurse, die am Kursanfang und am Kursende sehr genau dem tatsächlichen oder wahren Kurs entsprechen. Diese beiden Kurse werden nun miteinander zu einem resultierenden Kurs verrechnet. Die Verrechnung erfolgt bevorzugt durch eine gewichtete Mittelung der beiden Kurse, d.h. der einander zeitrichtig zugeordneten einzelnen Fahrzeugpositionen auf den beiden Kursen, die in der Recheneinheit 19 durchgeführt wird. Hierzu wird für jeden Vektor einer auf einem Kurs liegende Position die Kovarianz matrix S ermittelt und für zeitgleiche Positionsvektoren auf den beiden Kursen mit den zugehörigen Kovarianzen S der gewichtete Mittelwert berechnet. Werden die Vektoren der Fahrzeugpositionen auf dem ersten Kurs mit $P_1(t)$, die Vektoren der zeitgleichen Positionen des Fahrzeugs auf dem fiktiven, zweiten Kurs mit $P_2(t_E - t)$ bezeichnet, wobei $t_E$ der Zeitpunkt der mit dem Positionssensor 16 gemessenen Endposition des Schiffes am Fahrtende ist, so wird mit den von dem Navigationskern 18 gelieferten Kovarianzen $S_1(t)$ und $S_2(t_E - t)$ in der Recheneinheit 19 der gewichtete Mittelwert $P_{res}(t)$ der einen resultierenden Kurs ergebenden Fahrzeugpositionsvektoren gemäß

$$P_{res}(t) = \frac{S_2(t_E - t)\, P_1(t) + S_1(t)\, P_2(t_E - t)}{S_1(t) + S_2(t_E - t)} \qquad (1)$$

berechnet. Alle Positionsvektoren P sind dabei durch ihre Koordinaten x, y bei einer zweidimensionalen Bewegung z.B. eines Oberflächenschiffes bzw. x, y, z bei einer dreidimensionalen Bewegung z.B. eines Unterwasserfahrzeugs festgelegt. Die einzelnen gewichteten Mittelwerte, die im Speicher 20 abgespeichert werden, ergeben zeitrichtig aneinandergereiht den resultierenden Kurs des Fahrzeugs, der ggf. in der Anzeigeeinheit 22 dargestellt werden kann.

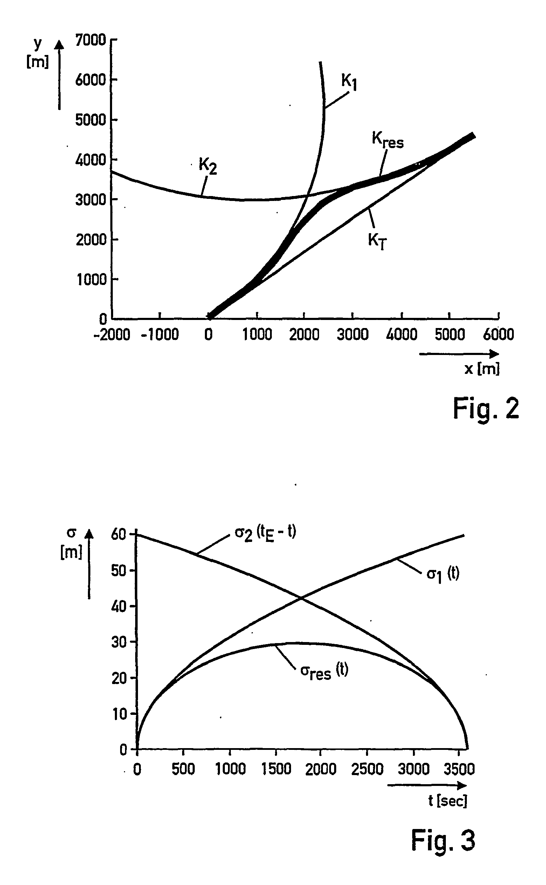

In Fig. 2 ist ein solchermaßen berechneter, resultierender Kurs für eine zweidimensionale Fahrzeugbewegung (x-y-Koordinaten) eines Wasserfahrzeugs dargestellt, das eine gewisse Strecke geradeaus gefahren ist. Die Navigationssensoren 11 und 12 haben während der Fahrt die Geschwindigkeit in Fahrtrichtung sowie den Kurswinkel gemessen. Beide Sensordaten sind mit einem großen Fehler behaftet. Der mit den Sensordaten vom Startpunkt des Fahrzeugs an berechnete erste Kurs ergibt die Linie $K_1$. Der mit den Sensordaten unter Anpassung der Navigationsalgorithmen von der tatsächlichen Position des Fahrzeugs am Ende der Strecke aus berechnete zweite Kurs ergibt die Linie $K_2$. Durch Verrechnung der beiden Kurse $K_1$ und $K_2$ mittels der vorstehend beschriebenen gewichteten Mittelung ergibt sich der resultierende Kurs $K_{res}$, der durch die stärker hervorgehobene Linie verdeutlicht ist. Der vom Wasserfahrzeug zurückgelegte tatsächliche oder wahre Kurs ist in Fig. 1 mit $K_T$ bezeichnet. Deutlich ist zu sehen, daß der resultierende Kurs $K_{res}$ am Anfang und am Ende sehr genau mit dem tatsächlichen Kurs $K_T$ übereinstimmt und im Mittelbereich an den tatsächlichen Kurs $K_T$ sehr gut angenähert ist.

Um den dem resultierenden Kurs $K_{res}$ anhaftenden Fehler zu verdeutlichen, wird in der Recheneinheit 19 noch die Kovarianzmatrix $S_{res}(t)$ als Funktion der Zeit gemäß

$$S_{res}(t) = \frac{S_1(t) \cdot S_2(t_E - t)}{S_1(t) + S_2(t_E - t)} \qquad (2)$$

berechnet. Auch diese Kovarianz $S_{res}(t)$ kann z.B. in der Anzeigeeinheit 23 dargestellt und so verdeutlicht werden.

In Fig. 3 ist ein Beispiel für eine sich aus der Kovarianz $S_{res}(t)$ für eine Vektorkomponeten x oder y der Positionsvektoren ergebende resultierende Standardabweichung $\sigma_{res}(t)$ dargestellt, wie sie beispielsweise bei einer Berechnung der beiden Kurse, des ersten Kurses und des fiktiven zweiten Kurses, mit einem mit Algorithmen der Trägheits- oder Inertialnavigation arbeitenden Navigationskern 18 berechnet worden sind, und zu diesem Zweck die als Kreisel und Beschleunigungsmesser ausgebildeten Navigationssensoren 11 und 12 die Drehrate $\omega$ und die Fahrzeugbeschleunigung a gemessen haben. Diese Standardabweichung $\sigma_{res}(t)$ berechnet sich aus den Varianzen $\sigma_1^2(t)$ und $\sigma_2^2(t_E - t)$ der entsprechenden Vektorkomponenten $x_1, x_2$ oder $y_1, y_2$ der beiden Kurse gemäß

$$\sigma_{res}(t) = \sqrt{\frac{\sigma_1^2(t) \cdot \sigma_2^2(t_E - t)}{\sigma_1^2(t) + \sigma_2^2(t_E - t)}} \qquad (3)$$

Zum Vergleich sind in Fig. 3 die Standardabweichung $\sigma_1(t)$ des ersten Kurses und die Standardabweichung $\sigma_2(t_E - t)$ des fiktiven zweiten Kurses dargestellt. Die resultierende Standardabweichung $\sigma_{res}(t)$ liegt unterhalb der Standardabweichungen für die beiden Kurse. Die Verbesserung beträgt ca. 30%.

Sind die von den Navigationssensoren ausgegebenen Sensordaten nicht voneinander statistisch unabhängig, so kann es vorteilhaft sein, bei der Berechnung von erstem Kurs und zweitem Kurs jeweils nur eine Hälfte der abgespeicherten Navigationsdaten zu verwenden, wobei zeitlich aufeinanderfolgende Navigationsdaten abwechselnd zur Berechnung des ersten Kurses und zur Berechnung des zweiten Kurses herangezogen werden.

Das Verfahren zur verbesserten Approximation des berechneten, von einem Fahrzeug zurückgelegten Kurses an den tatsächlich vom Fahrzeug abgefahrenen Kurs, dem sog. wahren Kurs, kann auch dazu verwendet werden, alle oder einige der übrigen Navigationsdaten, die als Zustandsvariable den momentanen Fahrzeugzustand zu jedem Zeitpunkt beschreiben, mit verbesserter Genauigkeit zu bestimmen. Z. B. kann es für einige der eingangs erwähnten Missionen eines Unterwasserfahrzeugs von Vorteil sein, die Lage des Unterwasserfahrzeugs, also Rollwinkel $\Phi$ und Nickwinkel $\vartheta$ sowie den Kurswinkel $\psi$ an verschiedenen Positionen des Kurses sehr genau zu kennen, um beispielsweise den Aspektwinkel, unter dem ein Unterwasserobjekt von einer am Unterwasserfahrzeug fest installierten Videokamera abgebildet worden ist, mit minimierten Fehler zu bestimmen. Die zur Berechnung der Kurse und deren Kovarianz verwendeten Navigationsalgorithmen mit Fehlerschätzer liefern zwangsläufig eine Schätzung dieser Zustandsvariablen oder eine Untermenge von diesen und ihrer Kovarianzen, und zwar sowohl bei der Berechnung des realen ersten Kurses des Unterwasserfahrzeugs als auch bei der im Nachhinein vorzunehmenden Berechnung des fiktiven, zweiten Kurses für eine vom Zeitpunkt des Kursendes an rücklaufenden Zeit, so daß Meßfehler der Sensoren nicht oder nur stark reduziert in die weitere Datenverarbeitung eingehen.

**Patentansprüche**

1. Verfahren zur Bestimmung des Kurses eines mit Navigationssensoren (11 - 15) zum Messen von Navigationsdaten ausgestatteten Fahrzeugs, insbesondere Unterwasserfahrzeugs, mit folgenden Verfahrensschritten:

   - die Position des Fahrzeugs am Kursanfang und die Position des Fahrzeugs am Kursende werden gemessen,
   - während der Fahrt werden die von den Navigationssensoren (11 - 15) fortlaufend gemessenen Navigationsdaten in Zuordnung zu ihren Meßzeitpunkten abgespeichert,
   - mit den gespeicherten, zeitbezogenen Navigationsdaten wird, ausgehend von der gemessenen Fahrzeugposition am Kursanfang, ein vom Fahrzeug zurückgelegter, erster Kurs berechnet,
   - mit den gespeicherten, zeitbezogenen Navigationsdaten wird, ausgehend von der gemessenen Fahrzeugposition am Kursende, ein fiktiver, zweiter Kurs für eine vom Zeitpunkt des Kursendes an zurücklaufende Zeit berechnet, und
   - durch Verrechnen der beiden Kurse wird ein resultierender Kurs bestimmt.

2. Verfahren nach Anspruch 1, **dadurch gekennzeichnet, daß** die Verrechnung durch eine gewichtete Mittelung der beiden Kurse vorgenommen wird.

3. Verfahren nach Anspruch 2, **dadurch gekennzeichnet, daß** für jeden Vektor einer auf einem Kurs liegende Position P die Kovarianz $S_1$ ermittelt wird und für zeitgleiche Positionen auf den beiden Kursen und den zugehörigen Kovarianzen der gewichtete Mittelwert gemäß

$$P_{res}(t) = \frac{S_2(t_E - t) \, P_1(t) - S_1(t) \, P_2(t_E - t)}{S_1(t) + S_2(t_E - t)} \qquad (1)$$

berechnet wird, wobei $P_1(t)$ der Vektor einer Position mit den Koordinaten $x_1, y_1, z_1$ zum Zeitpunkt t auf dem ersten Kurs, $P_2(t_E - t)$ der Vektor einer zeitgleichen Position mit den Koordinaten $x_2, y_2, z_2$ zum Zeitpunkt $t_E - t$, mit $t_E$ als Zeitpunkt der Positionsmessung am Kursende, auf dem zweiten Kurs und $P_{res}(t)$ der Vektor der zeitgleichen Position mit den Koordinaten $x_{res}, y_{res}, z_{res}$ zum Zeitpunkt t auf dem resultierenden Kurs ist.

4. Verfahren nach Anspruch 3, **dadurch gekennzeichnet, daß** für jeden Vektor einer Position $P_{res}(t)$ auf dem resultierenden Kurs eine resultierende Kovarianz $S_{res}(t)$ berechnet und diesem Positionsvektor $P_{res}(t)$ zugeordnet wird.

5. Verfahren nach Anspruch 4, **dadurch gekennzeichnet, daß** die Berechnung der resultierenden Kovarianz $S_{res}(t)$ aus den Kovarianzen $S_1(t)$ und $S_2(t_E-t)$ zeitgleicher Positionsvektoren $(P_1(t), P_2(t_E-t))$ auf dem ersten und zweiten Kurs gemäß

$$S_{res}(t) = \frac{S_1(t) \cdot S_2(t_E - t)}{S_1(t) + S_2(t_E - t)} \qquad (2)$$

durchgeführt wird.

**6.** Verfahren nach einem der Ansprüche 1 - 5, **dadurch gekennzeichnet, daß** bei der Berechnung von erstem Kurs und zweitem Kurs jeweils nur eine Hälfte der abgespeicherten Navigationsdaten verwendet wird, wobei zeitrichtig aufeinanderfolgende Navigationsdaten abwechselnd der einen und der anderen Kursberechnung zugeführt werden.

**7.** Verfahren nach einem der Ansprüche 1 - 6, **dadurch gekennzeichnet, daß** die Positionen des Fahrzeugs am Kursanfang und Kursende mittels eines Positionssensors (16) gemessen werden.

**8.** Verfahren nach Anspruch 7, **dadurch gekennzeichnet, daß** als Positionssensor (16) ein Global-Positioning-System (GPS) verwendet wird.

**Claims**

**1.** Method for determining the course of a vehicle which is equipped with navigation sensors (11 - 15) for measurement of navigation data, in particular an underwater vehicle, having the following method steps:

- the position of the vehicle at the start of the course and the position of the vehicle at the end of the course are measured,
- the navigation data measured continuously by the navigation sensors (11 - 15) is stored in association with the data measurement times during movement,
- a first course travelled by the vehicle is calculated using the stored, time-related navigation data, starting from the measured vehicle position at the course start,
- a fictitious second course for a time which would have passed by the time of the course end is calculated using the stored, time-related navigation data, starting from the measured vehicle position at the course end, and
- a resultant course is determined by calculation of the two courses.

**2.** Method according to Claim 1, **characterized in that** the calculation is carried out by weighted averaging of the two courses.

**3.** Method according to Claim 2, **characterized in that** the covariance $S_1$ is determined for each vector of a position P located on a course, and the weighted mean value is calculated using

$$P_{res}(t) = \frac{S_2(t_E - t)P_1(t) - S_1(t)P_2(t_E - t)}{S_1(t) + S_2(t_E - t)} \qquad (1)$$

for positions at the same time on the two courses and the associated covariances, where $P_1(t)$ is the vector of a position with the coordinates $x_1$, $y_1$, $z_1$ at the time t on the course, $P_2(t_E - t)$ is the vector of a position at the same time with the coordinates $x_2$, $y_2$, $z_2$ at the time $t_E - t$, where $t_E$ is a time of the position measurement at the course end, on the second course, and $P_{res}(t)$ is the vector of the position at the same time with the coordinates $x_{res}$, $y_{res}$, $z_{res}$ at the time t on the resultant course.

**4.** Method according to Claim 3, **characterized in that** a resultant covariance $S_{res}(t)$ is calculated for each vector of a position $P_{res}(t)$ on the resultant course, and is associated with this position vector $P_{res}(t)$.

**5.** Method according to Claim 4, **characterized in that** the resultant covariance $S_{res}(t)$ is calculated from the covariances $S_1(t)$ and $S_2(t_E-t)$ of position vectors ($P_1(t)$, $P_2(t_E-t)$) at the same time on the first and second courses using:

$$S_{res}(t) = \frac{S_1(t) \cdot s_2(t_E - t)}{S_1(t) + S_2(t_E - t)} \qquad (2)$$

**6.** Method according to one of Claims 1 to 5, **characterized in that**, when calculating the first course and the second course, only half of the stored navigation data is used in each case, with successive navigation data items at their correct times being supplied alternately to one and the other course calculation.

7. Method according to one of Claims 1 to 6, **characterized in that** the positions of the vehicle at the course start and at the course end are measured by means of a position sensor (16).

8. Method according to Claim 7, **characterized in that** a global positioning system (GPS) is used as the position sensor (16).


**Revendications**

1. Procédé de détermination de la trajectoire d'un véhicule, en particulier d'un véhicule sous-marin, équipé de détecteurs de navigation (11-15) pour la mesure de données de navigation, lequel procédé présente les étapes suivantes :

    - la position du véhicule au début de sa trajectoire et la position du véhicule à la fin de sa trajectoire sont mesurées,
    - pendant le déplacement, les données de navigation mesurées en continu par les détecteurs de navigation (11-15) sont conservées en mémoire en association à l'instant de leur mesure,
    - partant de la position mesurée du véhicule au début de sa trajectoire, une première trajectoire parcourue par le véhicule est calculée à partir des données de navigation rapportées au temps et conservées en mémoire,
    - partant de la position mesurée du véhicule à la fin de sa trajectoire, une deuxième trajectoire fictive sur la durée d'un retour à partir de l'instant de la fin de la trajectoire est calculée à l'aide des données de navigation rapportées au temps et conservées en mémoire, et
    - une trajectoire résultante est définie par recalcul des deux trajectoires.

2. Procédé selon la revendication 1, **caractérisé en ce que** le recalcul est réalisé par formation d'une moyenne pondérée des deux trajectoires.

3. Procédé selon la revendication 2, **caractérisé en ce que** pour chaque vecteur d'une position P située sur une trajectoire, on détermine la covariance $S_1$ et pour des positions au même instant sur les deux trajectoires et les covariances associées, on calcule la valeur moyenne pondérée par la relation :

$$P_{res}(t) = \frac{S_2(t_E - t)\, P_1(t) - S_1(t)\, P_2(t_E - t)}{S_1(t) + S_2(t_E - t)} \qquad (1)$$

dans laquelle $P_1(t)$ représente le vecteur d'une position de coordonnées $x_1$, $y_1$, $z_1$ à l'instant t sur la première trajectoire, $P_2(t_E - t)$ le vecteur d'une position de coordonnées $x_2$, $y_2$, $z_2$ à l'instant $t_E - t$, $t_E$ représentant l'instant de la mesure de la position à la fin de la trajectoire sur la même trajectoire, et $P_{res}(t)$ le vecteur de la position de coordonnées $x_{res}$, $y_{res}$, $z_{res}$ à l'instant t sur la trajectoire résultante.

4. Procédé selon la revendication 3, **caractérisé en ce que** pour chaque vecteur d'une position $P_{res}(t)$ sur la trajectoire résultante, on calcule une covariance résultante $S_{res}(t)$ et on l'associe à ce vecteur de position $P_{res}(t)$.

5. Procédé selon la revendication 4, **caractérisé en ce que** le calcul de la covariance résultante $S_{res}(t)$ à partir des covariances $S_1(t)$ et $S_2(t_E - t)$ de vecteurs de position $(P_1(t), P_2(t_E - t))$ sur la première et la deuxième trajectoire est réalisé sur l'équation :

$$S_{res}(t) = \frac{S_1(t) \cdot S_2(t_E - t)}{S_1(t) + S_2(t_E - t)} \qquad (2)$$

6. Procédé selon l'une des revendications 1 à 5, **caractérisé en ce que** lors du calcul de la première trajectoire et de la deuxième trajectoire, on utilise chaque fois seule une moitié des données de navigation conservées en mémoire, les données de navigation successives dans le temps étant amenées en alternance à l'un et à l'autre calcul de la trajectoire.

7. Procédé selon l'une des revendications 1 à 6, **caractérisé en ce que** les positions du véhicule au début de la trajectoire et à la fin de la trajectoire sont mesurées au moyen d'un détecteur de position (16).

8. Procédé selon la revendication 7, **caractérisé en ce que** comme détecteur de position (16), on utilise un système de positionnement global (GPS).

Fig. 1

EP 1 438 550 B1

EP 1 438 550 B1

Fig. 2

Fig. 3

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1923884 A1

**In der Beschreibung aufgeführte Nicht-Patentliteratur**

- **LARSEN, M.B.** Synthetic Long Baseline Navigation Of Underwater Vehicles. *Where Marine Science and Technology meet,* September 2000, vol. 3, 2043-2050